# EUROPÄISCHE PATENTSCHRIFT

(11) **EP 0 387 480 B1**
(45) Veröffentlichungstag und Bekanntmachung des Hinweises auf die Patenterteilung: **30.06.1993**
(21) Anmeldenummer: 90100217.0
(22) Anmeldetag: 05.01.1990
(51) Int. Cl.: C04B 24/28, C04B 40/06, C04B 28/02

(54) **Trockenmörtel und Verfahren zu seiner Herstellung**
Dry mortar and process for its fabrication
Mortier sec et son procédé de fabrication

(30) Priorität: 15.03.1989 DE 3908420
(43) Veröffentlichungstag der Anmeldung: 19.09.1990
(73) Patentinhaber: RÜTGERSWERKE AKTIENGESELLSCHAFT, 60326 Frankfurt (DE)
(72) Erfinder: Conrad, Karl-Hermann, Dr., D-4130 Moers (DE); Klein, Hans, D-4152 Kempen 1 (DE)

(56) Entgegenhaltungen:
- EP-A- 0 147 553
- EP-A- 0 207 473
- DE-A- 3 308 622
- GB-A- 1 002 154
- GB-A- 1 096 853
- CHEMICAL ABSTRACTS, Band 89, 1978, Seite 471, Zusammenfassung Nr. 116812h, Columbus, Ohio, US; & JP-A-78 24 312 (JAPAN VILENE CO., LTD) 07-03-1978

## Beschreibung

Die Erfindung betrifft einen neuen Trockenmörtel, der mit Epoxidharz vergütet ist.

Baustoffe mit hydraulisch abbindenden Bindemitteln, die mit Epoxidharzen vergütet sind, werden aufgrund ihrer ausgezeichneten physikalischen und chemischen Eigenschaften häufig in Bauwerken eingesetzt.

Dabei werden möglichst einfach zu handhabende Baustoffgemische benötigt, bei denen fehlerhafte Ausführungen durch falsches Dosieren oder mangelhaftes Durchmischen an der Baustelle vermieden werden sollte.

Aus DE-OS 35 23 479 ist ein Verfahren zur Herstellung eines Baustoffgemisches bekannt, bei dem jeweils Epoxidharz bzw. der dazugehörige Härter zuerst mit groben, dann mit feinen Zuschlagstoffen und danach erst mit Zement gemischt werden und die beiden so erhaltenen Vormischungen im richtigen Verhältnis miteinander vermischt und trocken gelagert werden. Vor Gebrauch wird das Trockengemisch lediglich noch mit dem Anmachwasser vermengt.

Nachteilig ist dabei, daß jeweils zwei Vormischungen getrennt hergestellt werden und miteinander vermischt werden müssen. Zudem ist nachteilig, daß auch für das Herstellen der Vormischungen eine bestimmte Mischvorschrift eingehalten werden muß, gemäß der Harz bzw. Härter zuerst mit einem grobkörnigen dann mit dem feinkörnigen Teil des Zuschlags und danach erst mit Zement vermischt wird.

Insbesondere aber ist die gleichbleibende Qualität dieses Trockenmörtels nicht gegeben. Epoxidharz und Härter liegen durch feine Zuschlagstoffe und Zement getrennt vor und müssen an der Baustelle im erhärtenden Beton miteinander reagieren, d. h. , sie müssen rasch und innig miteinander vermischt werden. Dies ist bei Stoffen unterschiedlicher Hydrophilie nicht möglich. Auch ein Zusatz von Emulgatoren hilft nur, solange diese Produkte nur kurze Zeit gelagert sind.

Aus diesem Grunde werden in der Praxis trotz der Problematik der Dosierungsfehler einkomponentige Epoxidharz-Härter-Emulsionen bevorzugt, die der Mörtelmischung zusammen mit dem Anmachwasser zugegeben werden, wie dies aus US-PS 3 926 886, DE-A 32 22 528, DE-A 32 33 531 und DE-A 33 45 446 bekannt ist.

Es ist daher Aufgabe der Erfindung, einen lagerstabilen epoxidharzvergüteten Trockenmörtel bereitzustellen, der Epoxidharz und Härter vorgemischt enthält und bei dem Harz und Härter nach Zugabe von Wasser sofort emulgieren und eine in feinster Verteilung gleichbleibende Härtung zusammen mit dem hydraulischen Bindemittel ergeben, so daß eine gleichbleibende Qualität des Mörtels und des resultierenden Bauteils gewährleistet ist.

Die Lösung der Aufgabe erfolgt durch einen Trockenmörtel gemäß der Ansprüche 1-4 und durch ein Verfahren zu seiner Herstellung gemäß der Ansprüche 5-7.

Es wurde gefunden, daß man eine lagerstabile, trockene, epoxidharzvergütete Mörtelmischung herstellen kann, wenn man Epoxidharz mit einem Aminsalz als latentem Härter innig vermischt und diese Mischung so mit hydraulischem Bindemittel und Zuschlagstoffen vermengt, daß die Harz-Aminsalzmischung nicht durch feinkörnige Zuschlagstoffe vom hydraulischen Bindemittel getrennt wird, sondern mit diesem in direktem Kontakt liegt.

Überraschenderweise treten bei einem solcherart hergestellten Trockenmörtel bei trockener Lagerung keine partiellen Härtungen und keine unerwünschten Hydrophobierungen oder Verklumpungen der hydraulischen Bindelmittel auf. Der Trockenmörtel ist lagerfähig, ohne daß sich seine Eigenschaften oder seine Qualitäten verändern. Beim Anrühren mit Wasser wird die Säurekomponente des Aminsalzes durch das alkalische, hydraulische Bindemittel neutralisiert und das freiwerdende Amin kann seine Wirkungen entfalten:

Infolge des vorgegebenen innigen Kontaktes mit dem Epoxidharz wird das Harz sofort optimal emulgiert. Die entstehende Harz-Härter-Emulsion benetzt sowohl das hydraulische Bindemittel als auch die Zuschlagstoffe. Harz und Härter werden dadurch gleichmäßig zwischen allen Komponenten der Mischung verteilt und können gemeinsam mit dem hydraulischen Bindemittel gleichmäßig durchhärten. Somit entstehen nach der Verarbeitung und Härtung in einer gleichbleibenden Qualität Bauteile ohne Fehlstellen im Bindemittelbereich.

Trockenmörtel sind trockene, fertige Mörtelmischungen, die nach dem Anmachen mit Wasser einen gebrauchsfähigen Mörtel ergeben. Sie bestehen aus hydraulischen Bindemitteln wie Kalken oder Zementen, Zuschlagstoffen wie z. B. Sand, Traß oder Kieß und gegebenenfalls Zusatzstoffen wie z. B. Fließhilfsmitteln, Emulgatoren, Härtungsbeschleunigern oder -verzögerern.

Als Zusatzstoffe mit Bindemittelcharakter sind auch härtende Kunststoffe, insbesondere Epoxidharz-Härter-Systeme anzusehen, die nach dem Anmachen parallel zu den hydraulischen Bindemitteln härten und zu einer weiteren Verfestigung des gehärteten Produkts führen.

Erfindungsgemäß einsetzbare Epoxidharze sind alle handelsüblichen flüssigen Epoxidverbindungen mit mindestens zwei Epoxidgruppen pro Molekül. Bevorzugt werden Glycidylverbindungen auf Basis Bisphenol-A und F mit Epoxidäquivalenten von 175-500.

Diese Produkte sind in Wasser emulgierbar und können bei Raumtemperatur gehärtet werden.

Auch die als latente Härter eingesetzten Aminsalze sind an sich bekannte Produkte. Es sind dies Salze die bei der Neutralisation einer aminischen Verbindung mit einer anorganischen oder organischen Säure erhalten werden.

Als anorganische Säure kann jede der gängigen Mineralsäuren eingesetzt werden, als organische Säuren aliphatische oder aromatische ein- oder mehrwertige Carbonsäuren mit 1 bis 10 C-Atomen. Bevorzugt sind solche Säuren, die mit Calciumionen schwerlösliche Salze bilden, wie z. B. Oxalsäure.

Als Aminkomponente können alle aliphatischen, cycloaliphatischen, heterocyclischen oder aromatischen Amine, Polyamine, Polyetherpolyamine oder Polyaminoamide dienen, von denen bekannt ist, daß sie Epoxidharze härten und die in Lee und Neville, Handbook of Epoxy Resins, McGras-Hill Book Company (1967) beschrieben sind. Bevorzugte Aminkomponenten sind aliphatische Di- und Polyamine der allgemeinen Formeln: 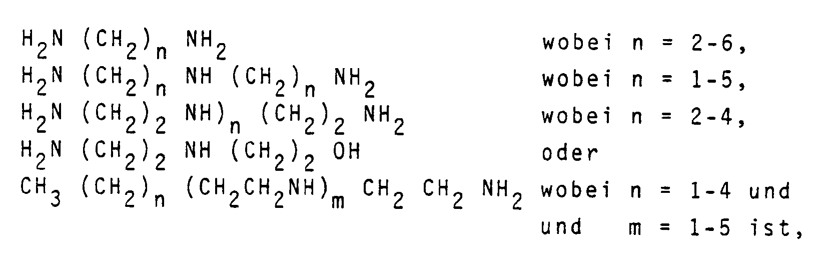
3,3,5(3,5,5)-Trimethyl-hexamethylendiamin,
3,3'-Dimethyl-4,4'-diaminodicyclohexylmethan und insbesondere Isophorondiamin, N-Aminoethyl-piperazin, 1,2-Diaminopropan, Methyl-pentamethylendiamin, Xylylendiamin oder Mischungen dieser Amine.

Die Aminkomponente wird mit der gewählten Säurekomponente neutralisiert, d. h. nach der Umsetzung mit der gewählten Säure sind keine freien Aminogruppen mehr vorhanden. Durch Eindampfen der Salzlösungen nach der Neutralisation werden die wasserfreien Aminsalze erhalten.

Diese Salze werden mit den Epoxidharzen intensiv vermischt, wobei das Mischungsverhältnis so eingestellt wird, daß pro Epoxidgruppe eine Ammoniumgruppe vorhanden ist.

Die Durchmischung erfolgt mit Hilfe üblicher Geräte, die eine gute Dispergierung und die Anwendung hoher Schwerkräfte erlauben, wie z. B. Walzenstühle, Dissolver, Planetenmischer, Kugel- oder Perlmühlen. Eine andere Art der Durchmischung von Epoxidharz und Aminsalz besteht darin, kurz vor oder nach der Neutralisation Epoxidharz in den wäßrigen Amin- oder Aminsalz-Lösungen zu dispergieren und die erhaltenen Emulsionen zu trocknen, bevor sie mit hydraulischem Bindemittel und Zuschlagstoffen gemischt werden. Erhalten wird eine gut lagerfähige, pastöse Masse, die sich überraschenderweise bei Zumischen der Bestandteile einer Trockenmörtelmischung gut verteilt und nicht zu Klumpenbildungen führt.

Darüberhinaus ist es möglich, in an sich bekannter Weise durch Abmischen der Masse in einem feinteiligen Stoff wie etwa Talkum, hochdisperser Kieselsäure oder Zementpulver ein feinteiliges, rieselfähiges Material herzustellen, das sich ebenfalls gut in eine Mörtelmischung einarbeiten läßt.

Die so erhaltenen epoxidharzvergüteten Trockenmörtel sind bei trockener Lagerung mehr als ein halbes Jahr lang lagerfähig ohne daß partielle Aushärtungen des hydraulischen Bindemittels oder des Epoxidharzes auftreten.

Bei Zumischen des Anmachwassers werden Harz und Aminsalz auch ohne zusätzlichen Emulgator leicht emulgiert. Die Säurekomponente des Aminharzes reagiert mit den alkalischen Bestandteilen des hydraulischen Bindemittels. Das Amin wird freigesetzt und führt zur Härtung des zwischen den Zuschlagstoffen und dem hydraulischen Bindemittel rein verteilten Epoxidharzes, während gleichzeitig das hydraulische Bindemittel durch Wasseraufnahme erhärtet.

So entsteht eine gehärtete Masse mit erhöhten mechanischen und verbesserten chemischen Eigenschaften. Insbesondere die Carbonatisierung entsprechender Betonmischungen sind wesentlich reduziert.

Aufgrund dieser bequemen Handhabung und der guten Eigenschaften eigenen sich die erfindungsgemäßen Trockenmörtel für alle Anwendungen, bei denen üblicherweise Mörtelmischungen eingesetzt werden, insbesondere für Mauer-, Putz- oder Estrichmörtel, sowie zur Herstellung von Reparaturmassen für beschädigte Mauer- oder Betonbauwerke.

## Patentansprüche

1. Trockenmörtel aus hydraulischen Bindemitteln, Zuschlagstoffen, Epoxidharz, latenten Härter und gegebenenfalls weiteren Zusatzstoffen, **dadurch gekennzeichnet**, daß als latente Härter Aminsalze verwendet werden, daß Harz und latente Härter innig miteinander vermischt und in direktem Kontakt mit dem hydraulischen Bindemittel vorliegen.

2. Trockenmörtel nach Anspruch 1, **dadurch gekennzeichnet**, daß als latente Härter Salze von Di- oder Polyaminen oder Polyaminoamiden verwendet werden.

3. Trockenmörtel nach den Ansprüchen 1 und 2, **dadurch gekennzeichnet**, daß als latente Härter Aminsalze von Säuren verwendet werden, die mit Calcium schwerlösliche Salze bilden.

4. Trockenmörtel nach Anspruch 3, **dadurch gekennzeichnet**, daß als latente Härter Aminsalze der Oxalsäure verwendet werden.

5. Verfahren zur Herstellung von Trockenmörtel gemäß der Ansprüche 1-4, **dadurch gekennzeichnet**, daß Epoxidharz und Aminsalz miteinander vermischt werden und dann zu diesem Gemisch nacheinander hydraulisches Bindemittel und Zuschlagstoffe zugegeben und jeweils gemischt werden.

6. Verfahren zur Herstellung von Trockenmörtel gemäß der Ansprüche 1-4, **dadurch gekennzeichnet**, daß Epoxidharz und Aminsalz miteinander vermischt und danach hydraulisches Bindemittel und Zuschlagstoffe zugegeben und gemeinsam mit dem Harz-Aminsalz-Gemenge gemischt werden.

7. Verfahren nach den Ansprüchen 6 und 7, **dadurch gekennzeichnet**, daß Epoxidharz und Aminsalz im wäßrigen Medium miteinander emulgiert und dann getrocknet werden, bevor sie mit hydraulischem Bindemittel und Zuschlagstoffen gemischt werden.

## Claims

1. A dry mortar comprising hydraulic binders, aggregates, epoxy resin, latent hardeners and where appropriate additional additives, characterized in that amine salts are used as the latent hardeners, and the resin and the latent hardeners are intimately mixed together and are present in direct contact with the hydraulic binder.

2. A dry mortar according to Claim 1, characterized in that salts of di- or polyamines or polyaminoamides are used as the latent hardeners.

3. A dry mortar according to Claims 1 and 2, characterized in that amine salts of acids which form difficult-to-dissolve salts with calcium are used as the latent hardeners.

4. A dry mortar according to Claim 3, characterized in that amine salts of oxalic acid are used as the latent hardeners.

5. A process for producing dry mortar according to Claims 1 to 4, characterized in that epoxy resin and amine salt are mixed together, and hydraulic binder and aggregates are successively added to the said mixture and are mixed in each case.

6. A process for producing dry mortar according to Claims 1 to 4, characterized in that epoxy resin and amine salt are mixed together, and after that hydraulic binder and aggregates are added and are mixed jointly with the resin/amine salt mixture.

7. A process according to Claims 6 and 7, characterized in that epoxy resin and amine salt are emulsified together in an aqueous medium and are then dried, before they are mixed with hydraulic binder and aggregates.

## Revendications

1. Mortier sec formé de liants hydrauliques, d'additifs, de résine époxy, de durcisseurs latents et éventuellement d'autres additifs complémentaires caractérisé en ce qu'on utilise comme durcisseurs latents des sels d'amine, en ce que la résine et les durcisseurs latents sont mélangés intimement l'un avec l'autre et qu'ils sont présents en contact direct avec le liant hydraulique.

2. Mortier sec selon la revendication 1 caractérisé en ce que comme durcisseurs latents, on utilise des sels de diamine ou de polyamine ou des polyaminoamides.

3. Mortier sec selon la revendication 1 ou 2 caractérisé en ce qu'on utilise comme durcisseurs latents des sels d'amine d'acide, qui forment avec le calcium des sels peu solubles.

4. Mortier sec selon la revendication 3 caractérisé en ce qu'on utilise comme durcisseurs latents, des sels d'amine de l'acide oxalique.

5. Procédé pour la préparation de mortier sec selon les revendications 1 à 4 caractérisé en ce qu'on mélange ensemble la résine époxy et le sel d'amine et que l'on ajoute à ce mélange successivement un liant hydraulique et les additifs et en ce que chaque fois on mélange.

6. Procédé pour la préparation de mortier sec selon les revendications 1 à 4 caractérisé en ce qu'on mélange ensemble la résine époxy et le sel d'amine et qu'on ajoute ensuite le liant hydraulique et les additifs, et qu'on les mélange ensemble avec le mélange de résine et de sel d'amine.

7. Procédé selon les revendications 6 et 7 caractérisé en ce qu'on émulsifie ensemble la résine époxy et le sel d'amine en milieu aqueux et qu'on les sèche ensuite, avant qu'ils soient mélangés avec le liant hydraulique et les additifs.
